# EUROPEAN PATENT APPLICATION

(11) **EP 4 799 948 A1**
(43) Date of publication of application: **02.09.2026**
(21) Application number: 25161065.5
(22) Date of filing: 28.02.2025
(51) Int. Cl.: B65G 1/02, A47B 47/02, E04B 1/18

(54) **AN AUTOMATED STORAGE AND RETRIEVAL SYSTEM**

(71) Applicant: AutoStore Technology AS, 5578 Nedre Vats (NO)
(72) Inventor: VANNES, Svein Ove, 5578 Nedre Vats (NO)
(74) Representative: Kilburn & Strode LLP

(57) **Abstract**

The disclosure relates to automated storage and retrieval system comprising a grid comprising a plurality of vertical columns each formed by four vertical frame members, one or more of the vertical columns for accommodating a stack of storage containers, wherein at least one of the vertical columns comprises a frame structure within its four vertical frame members and in contact with one or more of its four vertical frame members, and at least one vertically inclined connecting means comprising a first end configured to be secured to a top of the frame structure and a second end configured to be secured at a base of the system.

## Description

### TECHNICAL FIELD

The disclosure relates to an automated storage and retrieval system.

### BACKGROUND

An automated storage and retrieval system is a storage solution in which robots retrieve items from their logged location within the warehouse and deliver the items to a packing station or port. The system comprises a grid formed by vertical storage columns that are arranged to accommodate stacks of storage containers.

### SUMMARY

Aspect(s) of the present disclosure are set out in the independent claim(s). Other aspects and features of the present disclosure are set out in the dependent claims and in the description below.

### BRIEF DESCRIPTION OF THE DRAWINGS

Implementations of the present disclosure are described below, by way of example, with reference to the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows an isometric view of a vertical frame member for use in the system of Fig. 1;
Fig. 5B shows a side view of the vertical frame member of Fig. 5B;
Fig. 6 shows an exploded view of a vertical frame member for use in the system of Fig. 1;
Fig. 7A shows a front right perspective view of a grid for use in the system of Fig. 1;
Fig. 7B shows a first side view of the grid of Fig. 7A;
Fig. 7C shows a second side view of the grid of Fig. 7A;
Fig. 7D shows a first top view of the grid of Fig. 7A;
Fig. 7E shows a second top view of the grid of Fig. 7A;
Fig. 8A shows an example of a vertically inclined connecting means for use in the grid of Fig. 7A;
Fig. 8B shows a top view of the vertically inclined connecting means of Fig. 8A;
Fig. 9A shows a first example of lateral forces acting on a frame structure within the grid of Fig. 7A;
Fig. 9B shows a second example of lateral forces acting on a frame structure within the grid of Fig. 7A;
Fig. 9C shows a third example of lateral forces acting on a frame structure within the grid of Fig. 7A; and
Fig. 10 shows a flowchart illustrating a method of the present disclosure for use in the system of Fig. 1.

Like reference numerals are used for like components throughout the detailed description.

### DETAILED DESCRIPTION

In overview, the disclosure relates to an automated storage and retrieval system a grid comprising a plurality of vertical columns each formed by four vertical frame members. The one or more of the vertical columns are arranged to accommodate a stack of storage containers. At least one of the vertical columns comprises a frame structure within its four vertical frame members and in contact with one or more of its four vertical frame members, and at least one vertically inclined connecting means comprising a first end configured to be secured to a top of the frame structure and a second end configured to be secured at a base of the system. The frame structure provides structural support within the grid. The vertically inclined connecting means connecting the top of the frame structure to the base of the system provides further structural support within the grid.

Traditional storage solutions usually involve the arrangement of goods on rows of shelves within a warehouse. The shelf location for each item is recorded in an inventory, and goods are retrieved from the shelves by a stock picker. The shelves are restocked, and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robotic container-handling vehicles retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The grid is subjected to significant lateral forces, i.e., forces acting generally in a horizontal direction. Lateral forces may arise from movement of the robotic container-handling vehicles in the X and Y directions 108, 110 along the rail system or from external tremors or other destabilising forces, for example, seismic activity. Seismic activity may apply large forces to the grid. Lateral forces have the potential to become uplift forces, i.e., forces or upward pressure applied to the grid that may raise the grid relative to its surroundings. It is therefore desirable to include grid restraint or support within the grid.

One known system for providing support within a grid is to provide individual struts between each adjacent vertical frame member of a grid. This system is difficult and time consuming to construct, and its impact in minimising undesirable forces can be too minimal. A further known system is to provide a bracing means that is attached to a top and a base of an existing frame structure of a grid. This system uses the frame members of the grid for bracing and attachment of the bracing means, which may not provide a large enough reduction of lateral forces, particularly when e frame members are typically made of aluminium as is typical. The known systems typically require reinforcing of the floor. The known systems do not provide sufficient support or grid restraint to reduce significant lateral forces acting on the grid during, for example, seismic activity.

The present disclosure relates to a system that provides structural support within the grid through use of a frame structure, separate from the frame members. The present disclosure further comprises vertically inclined connecting means connecting the top of the frame structure to the base of the system to provide further structural support. This reduces or removes the need to reinforce the floor.

One or more aspects of the invention of the present application are set out in the claims.

This overview is provided to introduce, in simplified form, a selection of concepts that are further described herein. The presence of a feature in this overview does not imply that the feature is essential to the disclosure.

The present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

The present disclosure relates to an automated storage and retrieval system comprising a grid. The grid comprises a plurality of vertical columns each formed by four vertical frame members. The one or more of the vertical columns are for accommodating a stack of storage containers. The at least one of the vertical columns comprises a frame structure within its four vertical frame members. The frame structure is in contact with one or more of its four vertical frame members. The at least one of the vertical columns further comprises at least one vertically inclined connecting means. The at least one vertically inclined connecting means comprises a first end configured to be secured to a top of the frame structure and a second end configured to be secured at a base of the system. The frame structure is separate from the vertical frame members, thereby providing structural support within the grid. As the frame structure is formed within the vertical frame members, only one vertical column (or one storage or grid cell) of the grid is used by the frame structure, thereby minimising the amount of space used in the grid. Further structural support is provided as the vertically inclined connecting means connect the top of the frame structure to the base of the system.

The at least one vertically inclined connecting means may be continuous from the first end to the second end. Construction of the grid is therefore simplified due to the continuous vertically inclined connecting means.

The at least one vertically inclined connecting means may comprise any one of: a rope, a flat wire, a wire, a cord, a cable, a string, a bar, or a strut. The vertically inclined connecting means can therefore be flexible or rigid depending on the requirements of the grid.

The at least one vertically inclined connecting means may extend from the top of the frame structure to the base of the system at an angle between approximately 15 degrees and one of: 90 degrees, 75 degrees, 60 degrees, 45 degrees, or 30 degrees, from the top of the frame structure. This allows a flexible system that can be tailored to the requirements of the grid based on expected lateral forces. A smaller angle from the top of the frame structure means that forces may be further reduced, resulting in increased structural support.

The second end may be configured to be secured to the base of the system at a predetermined distance from a base of the frame structure. This allows a flexible system that can be tailored to the requirements of the grid based on expected lateral forces. A greater distance from the base of the frame structure means that that forces may be further reduced, resulting in increased structural support.

The base of the system may be an external floor underlying the grid, or a floor of the grid. The second end of the vertically inclined connecting means is configured to be secured at a base of the system. As the base of the system is a floor, structural support is increased. When the base of the system is an external floor underlying the grid, structural support is further increased.

Each vertical frame member may have a cross-section comprising a hollow section and two vertical side sections. The vertically inclined connecting means may extend through the hollow section, hence minimising the amount of space used in the grid.

The at least one vertically inclined connecting means may extend through respective hollow sections from the top of the frame structure to the base of the system. As the vertically inclined connecting means do not require additional space to support the system, the amount of space used in the grid is minimised.

The cross-section may comprise at least one fixing means configured to connect the two vertical side sections. The vertical side sections have increased stability when they are connected via a fixing means, hence providing further structural support,
Each vertical side section may comprise two perpendicular storage container guiding plates, each storage container guiding plate for accommodating a corner of at least one storage container. The container guiding plates enable stable vertical movement of containers within the columns.

The frame structure may be secured to a base of the system. This provides further structural support as the forces are reduced by securing the frame structure to the base of the system.

The frame structure may comprise four sides. This means the frame structure supports the vertical frame members and that additional vertically inclined connecting means may be added, further increasing structural support.

Each of the four sides may comprise two vertical edges, wherein each vertical edge is perpendicularly joined to an adjacent vertical edge to form a quadrilateral shape. Each of the four sides may comprise two horizontal edges. The frame structure fits within one vertical column (or one storage or grid cell) of the grid within four vertical frame members, hence minimising the amount of space used in the grid.

The at least one vertically inclined connecting means may be secured to a centre of a horizontal edge that comprises the top of the frame structure. This aids in providing structural support as the vertically inclined connecting means are evenly secured along the top of the frame structure.

The four sides may comprise a first pair of opposite sides and a second pair of opposite sides, and wherein the at least one vertically inclined connecting means may be a plurality of vertically inclined connecting means comprising two first pairs of vertically inclined connecting means connected to the first pair of opposite sides of the frame structure. Additional vertically inclined connecting means on opposite sides of the frame structure enable increased and even displacement of forces acting on the grid.

The two first pairs of vertically inclined connecting means may extend along a first direction from the frame structure. This ensures even displacement of forces acting on the grid.

The plurality of vertically inclined connecting means may comprise two second pairs of vertically inclined connecting means connected to the second pair of opposite sides of the frame structure. Further additional vertically inclined connecting means on opposite sides of the frame structure enable even displacement of forces acting on the grid and further increased displacement of forces acting on the grid.

The two second pairs of vertically inclined connecting means may extend along a second direction from the frame structure. This ensures even displacement of forces acting on the grid.

Each pair of vertically inclined connecting means nay be a pair of symmetrical vertically inclined connecting means extending in opposite directions along the first or second direction from the frame structure. This ensures even displacement of forces acting on the grid.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

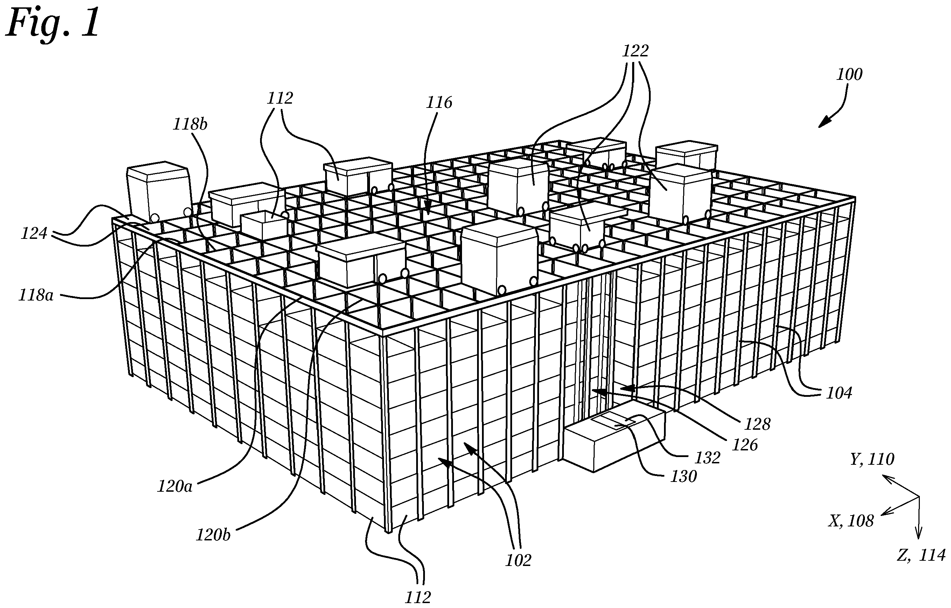

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape, and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts, or robots.

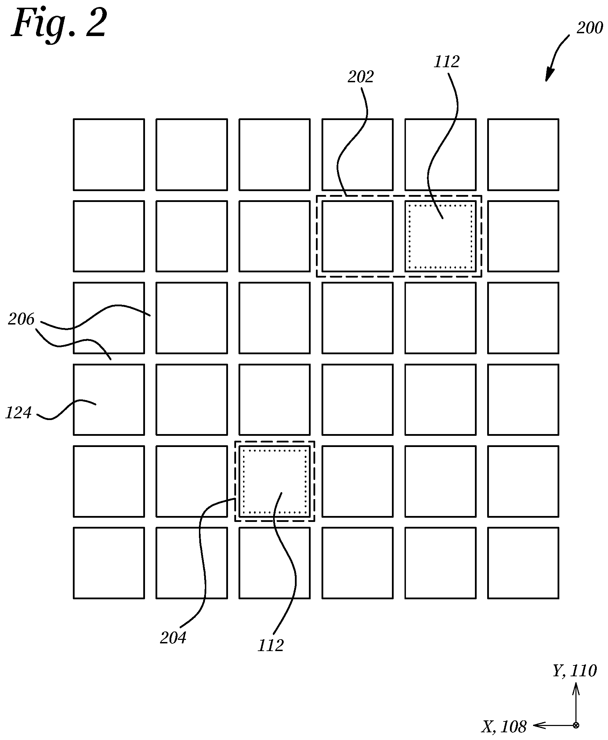

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

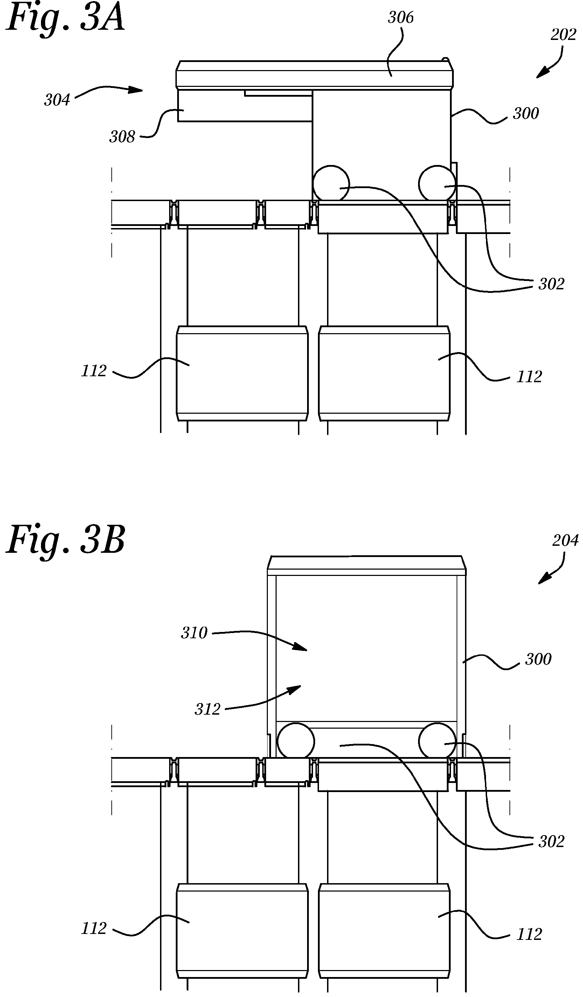

A first, 'cantilever' type of robot 202 is shown in more detail in Fig. 3A and includes a body 300, a set of wheels 302 and a lifting device 304. The body 300 contains operational equipment (not shown) for the robot 202 including drive, power, and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

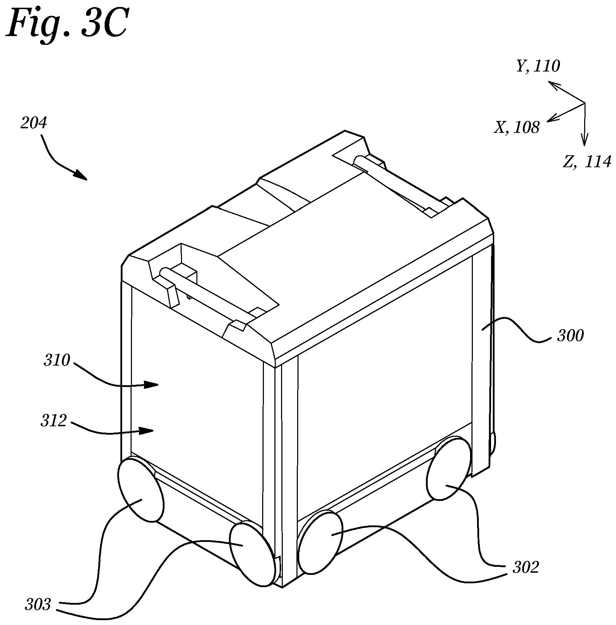

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303, respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

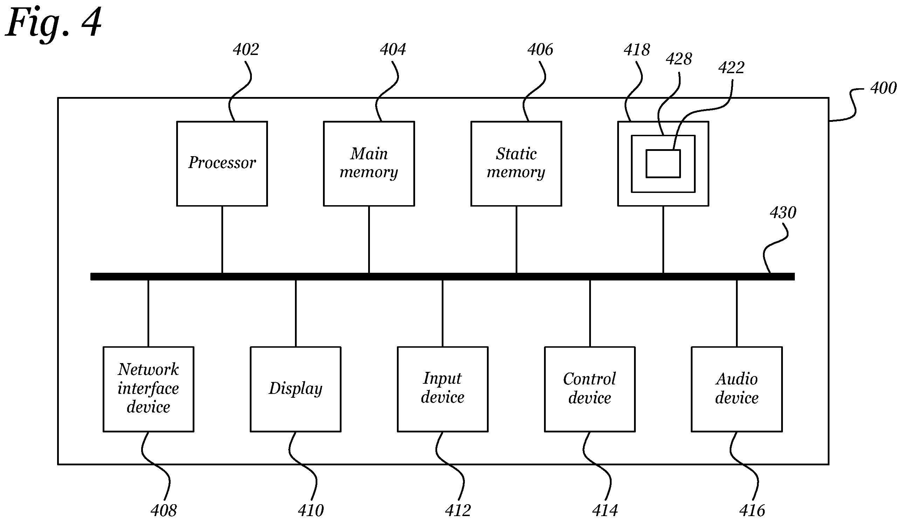

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

In operation, each bin 112 is given a unique identifier, which may be marked on the bin 112 using a computer-readable identifier (e.g., a barcode, quick-response code, or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips, and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port columns 126, 128, gripped and lifted by a robot 202, 204 and delivered to the desired storage cell, bins above the desired position being repositioned, if necessary, as discussed above.

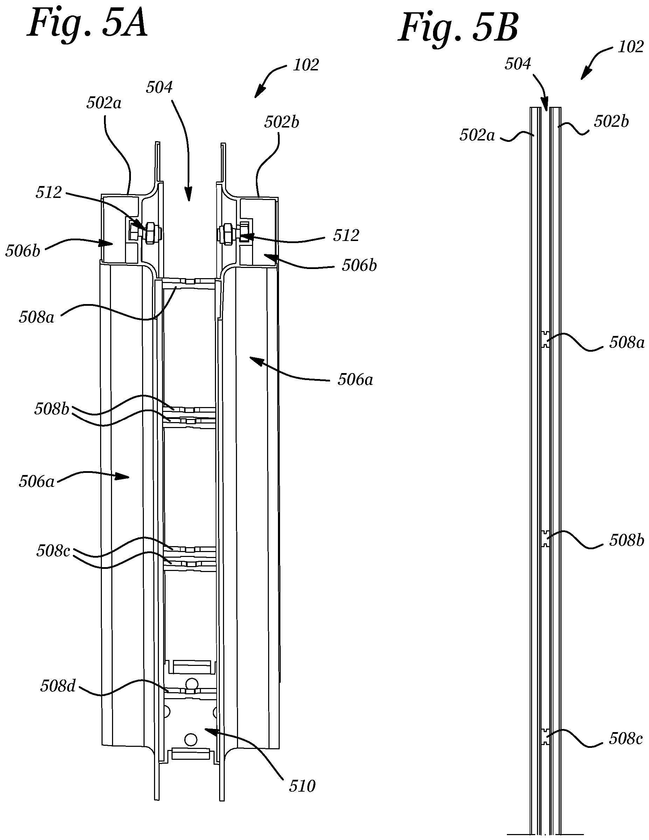

Fig. 5A shows an isometric view of a vertical frame member 102 for use in the system of Fig. 1. The vertical frame member 102 comprises two vertical side sections 502a, 502b. A cross-section of the vertical frame member 102 may be described as comprising a hollow section 504 (or space 504) and the two vertical side sections 502a, 502b. The vertical frame member 102 may be described as a split column.

Each vertical side section 502a, 502b may be described as comprising two perpendicular storage container guiding plates 506a, 506b. Each storage container guiding plate 506a, 506b is arranged to accommodate a corner of at least one storage container. The vertical side sections 502a, 502b shown in Fig. 5A are curved at a portion arranged to accommodate a corner of at least one storage container. The portion arranged to accommodate a corner of at least one storage container may comprise a right-angle shape. The vertical side sections 502a, 502b and storage container guiding plates 506a, 506b may alternatively be rectilinear at the portion arranged to accommodate a corner of at least one storage container.

The vertical frame member 102 comprises a plurality of fixing means 508 configured to connect the two vertical side sections 502a, 502b. In other words, the cross-section comprises a plurality of fixing means 508 configured to connect the two vertical side sections 502a, 502b. In any example, the vertical frame member 102 may comprise at least one fixing means configured to connect the two vertical side sections 502a, 502b. In other words, the cross-section may comprise at least one fixing means configured to connect the two vertical side sections 502a, 502b.

The fixing means 508 of Fig. 5A comprises spacers 508a, 508b, 508c, 508d. The spacers 508a, 508b, 508c, 508d may be brackets. The spacers 508a, 508b, 508c, 508d may be described as forming the hollow section 504 between the vertical side sections 502a, 502b. The spacers 508a, 508b, 508c, 508d may comprise fasteners to connect to each of the two vertical side sections 502a, 502b. Each vertical side section 502a, 502b comprises a fastener 512, such as a nut, bolt, screw, or other joining device, as shown in Fig. 5A. Each vertical side section 502a, 502b may comprise one or more fasteners 512.

The lowermost spacer 508d may be arranged to engage a leveling means 510, as shown in Fig. 5A. The levelling means 510 may comprise levelling feet, levelling mounts, leveller bolts, antivibration pads, antivibration mounts, mounts, levellers, levelling devices, or any other suitable levelling means. A levelling means may be used to establish points in the same horizontal plane, i.e., to ensure a base of a grid is level.

Fig. 5B shows a side view of the vertical frame member 102 of Fig. 5B.

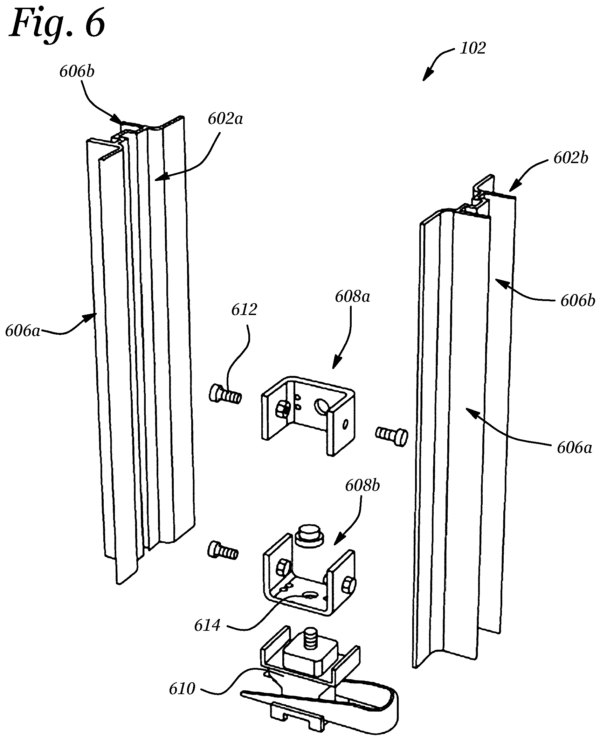

Fig. 6 shows an exploded view of a vertical frame member 102 for use in the system of Fig. 1. The features of the vertical frame member 102 may be used in combination with any of the features of the vertical frame member 102 of Figs. 5A-5B.

The vertical frame member 102 comprises two vertical side sections 602a, 602b. A cross-section of the vertical frame member 102 may be described as comprising a hollow section (or space) and the two vertical side sections 602a, 602b.

Each vertical side section 602a, 602b may be described as comprising two perpendicular storage container guiding plates 606a, 606b. Each storage container guiding plate 606a, 606b is arranged to accommodate a corner of at least one storage container. The vertical side sections 602a, 602b shown in Fig. 6 are substantially rectilinear at a portion arranged to accommodate a corner of at least one storage container. The portion arranged to accommodate a corner of at least one storage container may comprise a right-angle shape. The vertical side sections 602a, 602b may alternatively be curved at the portion arranged to accommodate a corner of at least one storage container.

The vertical frame member 102 comprises a plurality of fixing 608 means configured to connect the two vertical side sections 602a, 602b. In other words, the cross-section comprises a plurality of fixing means 608 configured to connect the two vertical side sections 602a, 602b. The fixing means 608 of Fig. 6 comprises spacers 608a, 608b. The spacers 608a, 608b may be brackets. The spacers 608a, 608b form the hollow section between the vertical side sections 602a, 602b. The spacers 608a, 608b comprise fasteners 612 to connect to each of the two vertical side sections 602a, 602b. Each vertical side section 602a, 602b may comprise at least one fastener, such as a nut, bolt, screw, or other joining device.

The lowermost spacer 608b comprises a hole or slot 614 arranged to engage a leveling means 610. The levelling means 610 may comprise levelling feet, levelling mounts, leveller bolts, antivibration pads, antivibration mounts, mounts, levellers, levelling devices, or other suitable levelling means.

For any vertical frame member of any described example, the storage container guiding plates have a shape adapted to receive and vertically guide the movement of corresponding corners of storage containers. Four vertical frame members define or form a storage column, so the storage container guiding plates cooperate with one another to form a vertical guide path for the storage container.

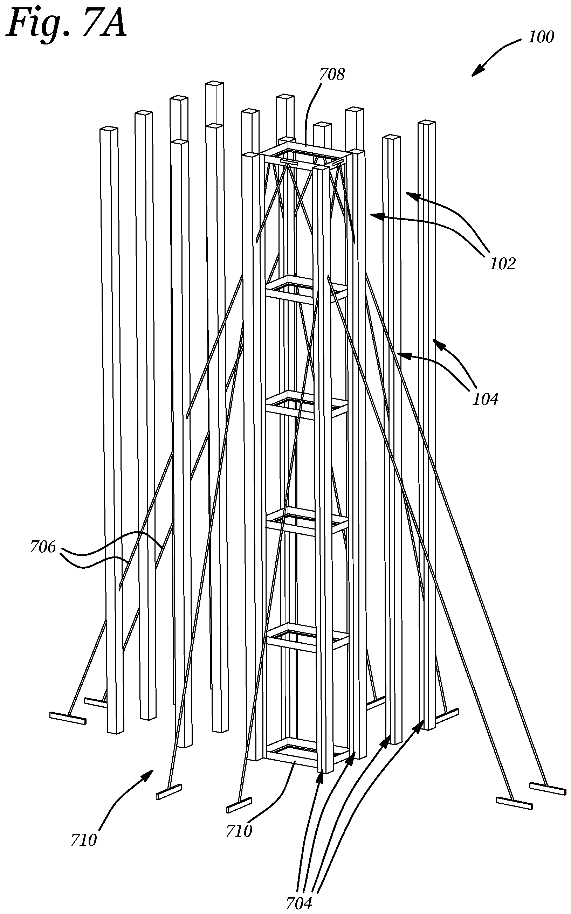

Fig. 7A shows a front right perspective view of a grid 100 for use in the system of Fig. 1. The grid 100 comprises a frame formed by a plurality of generally rectilinear, adjacent vertical columns 102. The vertical columns 102 extend in the X and Y directions 108, 110. One or more of the vertical columns 102 may be arranged to accommodate a stack of storage containers.

The vertical columns 102 are each formed by or between vertical frame members 104. More specifically, each vertical column 102 is formed by four vertical frame members 104. The vertical frame members 104 may comprise the vertical frame members 104 of Figs 5A-5B and/or Fig. 6. The vertical frame members 104 are arranged in rows 704 in a first direction, the X direction 108. The vertical frame members 104 may be described as being arranged in rows in a second direction, the Y direction 110.

One of the vertical columns 102 comprises a frame structure 702 within its four vertical frame members 104. The frame structure 702 is in contact with each of its four vertical frame members 104. A grid may comprise any number of frame structures 702 within any four vertical frame members 104. The frame structure 702 may be secured at a base 712 of the grid 100 or system. The base 712 of the system may be an external floor underlying the grid, or a floor of the grid, or a base of a facility in which the grid 100 is disposed.

The frame structure 702 comprises four sides. Each of the four sides comprises two vertical edges. Each vertical edge is perpendicularly joined to an adjacent vertical edge. The perpendicular adjoining of adjacent vertical edges may form a quadrilateral shape. Each of the four sides comprises two horizontal edges. A first horizontal edge of the two horizontal edges is disposed at a base 710 of the frame structure 702. More specifically, the first horizontal edge is disposed on the base 712 of the grid 100 or system. A second horizontal edge of the two horizontal edges is disposed at a top 708 of the frame structure 702. In other words, the second horizontal edge comprises the top 708 of the frame structure 702. The four sides comprise a first pair of opposite sides and a second pair of opposite sides.

The vertical column 102 comprising the frame structure 702 comprises a plurality of vertically inclined connecting means 706. The description of Fig. 7A describes a plurality of vertically inclined connecting means 706. The frame structure 702 may comprise one or more (or any number of) vertically inclined connecting means 706.

Each vertically inclined connecting means 706 is secured to a centre of the second horizontal edge of the frame structure 702. The vertically inclined connecting means 706 each extend from the top 708 of the frame structure 702 to the base 712 of the system or the grid 100.

In general, each vertically inclined connecting means 706 is secured or connected to the top 708 of the frame structure 702. Each vertically inclined connecting means 706 may be secured to an underside of the top 708 of the frame structure 702 or an external side of the top 708 of the frame structure 702. Each vertically inclined connecting means 706 may be secured to the top 708 of the frame structure 702 by a (connection) plate, (connection) bracket, clamp, clamp, forked connector, two-sided connection bracket, two-sided connection plate, or other securing means.

When a vertically inclined connecting means is secured to an underside of the top 708 of the frame structure 702, the securing means preferably has a width that does not exceed the width and shape of the top 708 of the frame structure 702. This avoids interference of the securing means with the vertical movement of storage containers in the vertical column 102 comprising the frame structure 702.

When a vertically inclined connecting means is secured to an external side of the top 708 of the frame structure 702, interference of the securing means with the vertical movement of storage containers in the vertical column 102 comprising the frame structure 702 is avoided.

In general, each vertically inclined connecting means 706 is secured or connected to the base 712 of the grid 100 or system. Each vertically inclined connecting means 706 may be secured to or at the base 712 of the grid 100 or system (or floor on which the system rests) by a (connection) plate, (connection) bracket, clamp, clamp, forked connector, two-sided connection bracket, two-sided connection plate, or other securing means.

A same or identical securing means may be used to secure each vertically inclined connecting means 706 to the top 708 of the frame structure 702 and to the base 712 of the grid 100 or system. This provides improved efficiency of manufacture and installation.

Each vertically inclined connecting means 706 comprises a first end and a second end. The first end is configured to be secured to the top 708 of the frame structure 702. More specifically, the first end is configured to be secured to the centre of the second horizontal edge of the frame structure 702. The second end is configured to be secured at, or near, the base 712 of the system or the grid 100, or secured to a floor below the base 712.

Each vertically inclined connecting means 706 is continuous (no breaks, or discontinuities, or connections for example) from the first end to the second end. Each vertically inclined connecting means 706 may comprise any one of a rope, a flat wire, a wire, a cord, a cable, a string, a bar or a strut. Each vertically inclined connecting means 706 may be a flexible member or structure such as a rope, a flat wire, a wire, a cord, a cable, a string. Each vertically inclined connecting means 706 may be a rigid member such as a bar or a strut. A material of each vertically inclined connecting means 706 may comprise steel or the like.

The hollow section 504 of each vertical frame member 102 is arranged to allow at least one vertically inclined connecting means 706 to extend or pass through the grid 100. In other words, each vertically inclined connecting means 706 extends or passes through the hollow section of a respective vertical frame member 102, or each vertically inclined connecting means 706 extends or passes through the hollow sections of the vertical frame members 102 of a row. Each vertically inclined connecting means 706 may extend through respective hollow sections 504 from the top 708 of the frame structure 702 to the base 712 of the system or grid 100.

As four vertical frame members 104 define or form a storage column and the vertically inclined connecting means 706 extend through respective vertical frame members 102, the vertically inclined connecting means does not interfere with the vertical guide path for the storage container within the storage column.

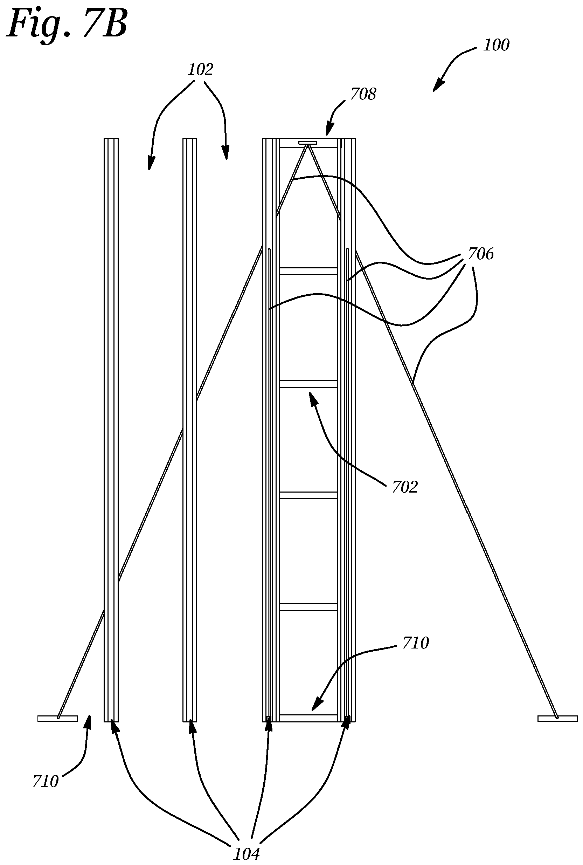

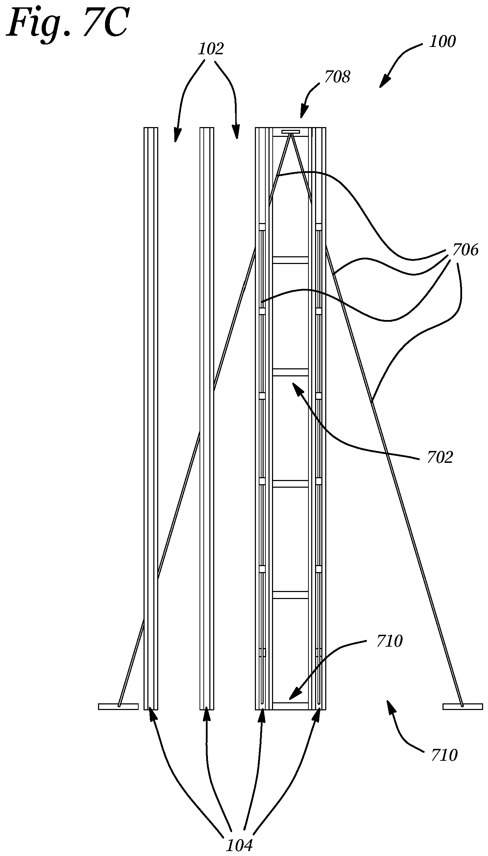

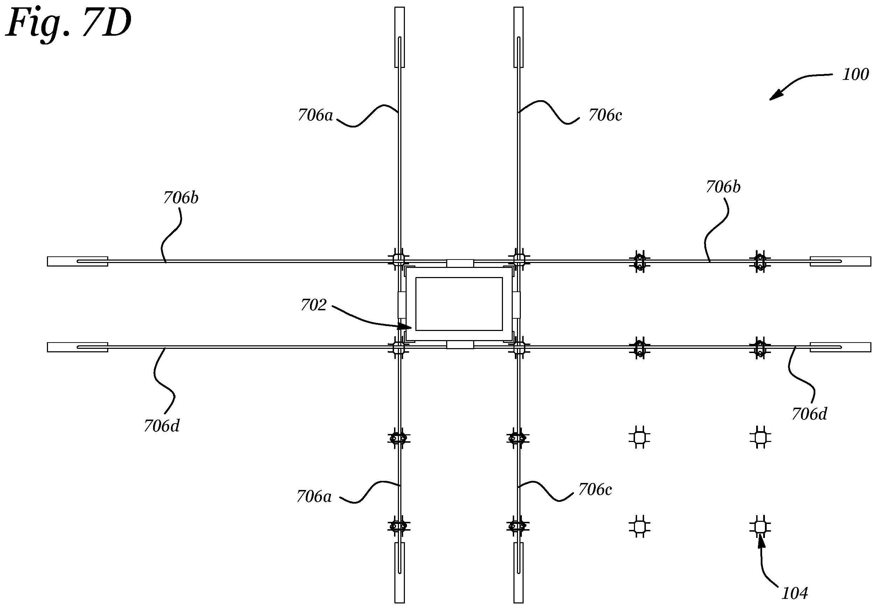

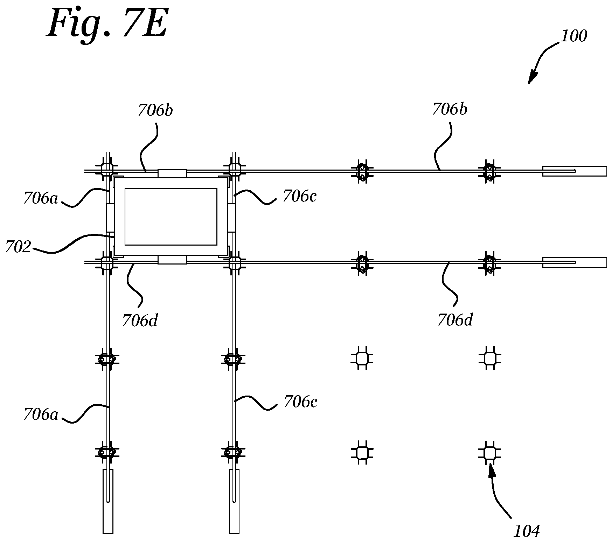

Fig. 7B shows a side view of the grid 100 of Fig. 7A. Fig. 7C shows a side view of the grid 100 of Fig. 7A. Fig. 7D shows a top view of the grid 100 of Fig. 7A. Fig. 7E shows a top view of the grid 100 of Fig. 7A.

Referring to Fig. 7D but also relating to each of Figs. 7A, 7B, 7C, and 7E, the plurality of vertically inclined connecting means 706a, 706b, 706c, 706d comprise two first pairs of vertically inclined (non-vertical) connecting means 706a, 706c connected to the first pair of opposite sides of the frame structure 702, and two second pairs of vertically inclined connecting means 706b, 706d connected to the second pair of opposite sides 704b, 704d of the frame structure 702. The two first pairs of vertically inclined connecting means 706a, 706c extend along the first direction 108 from the frame structure 702. The two second pairs of vertically inclined connecting means 706b, 706d extend along the second direction 110 from the frame structure 702. Each pair of vertically inclined connecting means 706a, 706b, 706c, 706d may be described as a pair of symmetrical vertically inclined connecting means 706a, 706b, 706c, 706d. Each pair of vertically inclined connecting means 706a, 706b, 706c, 706d may be described as extending in opposite directions along the first or second direction from the frame structure 702. Each pair of vertically inclined connecting means 706a, 706b, 706c, 706d may be described as being secured to the centre of the top 708 of the frame structure 702. Each pair of vertically inclined connecting means 706a, 706b, 706c, 706d may be described as being secured to the base 712 of the system at or past opposite sides of the frame structure 702.

In Fig. 7E, the second end extending to the base 712 of the system or the grid 100 of one of each of the first pair of vertically inclined connecting means 706a, 706c and one of each of the second pair of vertically inclined connecting means 706b, 706d are not shown.

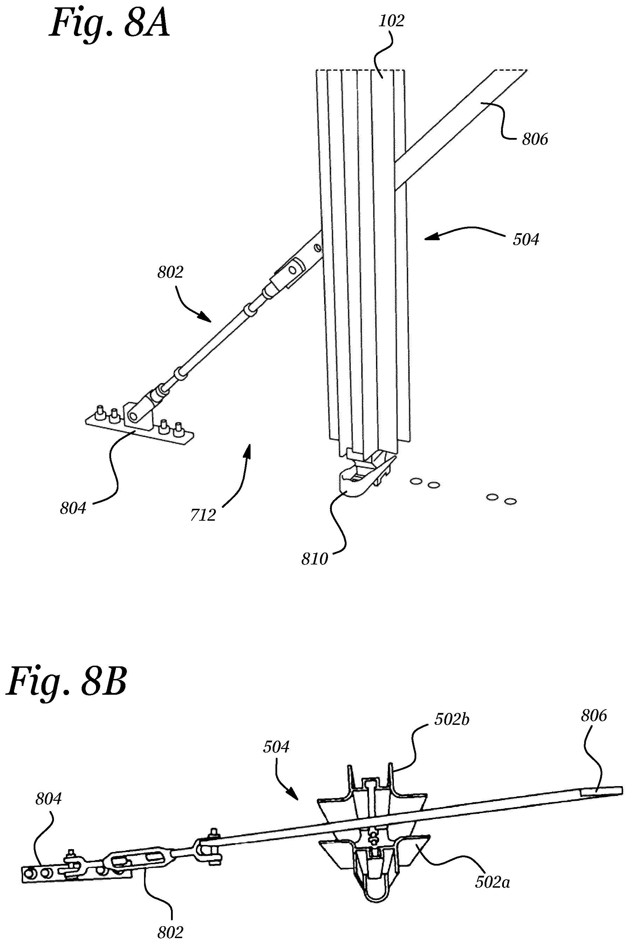

Fig. 8A shows an example of a vertically inclined connecting means 806 for use in the grid of 7A. Any of the features of the vertically inclined connecting means may be used in combination with any of the features of the other vertically inclined connecting means 706 described throughout. The vertically inclined connecting means 806 is secured to the base 712 of the grid of Fig. 7A. The vertically inclined connecting means 806 is arranged, for instance, diagonally through the hollow section 504 of the vertical frame member 104. The vertical frame member 104 engages a levelling means 810. The levelling means 810 may be any described levelling means 510, 610. The vertically inclined connecting means 706 and vertical frame member 104 are secured to the base 712 of the system. The vertically inclined connecting means 806 is secured to the base 712 of the system with a connection plate 804 bolted to the base 712 of the system.

The vertically inclined connecting means 806 comprises tensioning means 802 at the second end. A tensioning means applies tension to the vertically inclined connecting means 806. The tensioning means 802 connects a length of the vertically inclined connecting means 806 to the connection plate 804 at the base 712 of the system. The tensioning means may be any suitable tensioning means.

In any example, the vertically inclined connecting means 706 may not comprise a tensioning means at the second end. The vertically inclined connecting means 706 may be connected directly to the connection plate 804 at the base 712 of the system, directly to any other suitable securing means at the base 712 of the system, or directly to the base 712 of the system.

In any example, the vertically inclined connecting means 706, 806 may comprise a tensioning means at the first end. The tensioning means may connect a length of the vertically inclined connecting means 706, 806 to a connection plate at the top 708 of the frame structure 702. The tensioning means may be any suitable tensioning means.

In any example, the vertically inclined connecting means 706, 806 may not comprise a tensioning means at the first end. The vertically inclined connecting means 706, 806 may be connected directly to a connection plate at the top 708 of the frame structure 702, directly to any other suitable securing means at the top 708 of the frame structure 702, or directly to the top 708 of the frame structure 702.

When the securing means is a connection plate 804, the frame structure 702 comprises a connection plate 804 or bracket arranged to connect to an internal side of the top 708 of the frame structure 702 and the external side of the top 708 of the frame structure 702. The securing means at the top 708 of the frame structure 702 may comprise a forked connector or clamp arranged to connect to an internal side of the top 708 of the frame structure 702 and the external side of the top 708 of the frame structure 702. The securing means at the top 708 of the frame structure 702 may comprise a two-sided connection bracket or plate arranged to connect to a plurality of points of an internal side of the top 708 of the frame structure 702 and a plurality of points of the external side of the top 708 of the frame structure 702.

There may be one or more bolts or other fastening means passing through any of the described securing means, arranged to secure the securing means to the frame structure 702.

Fig. 8B shows a top view of the vertically inclined connecting means of Fig. 8A.

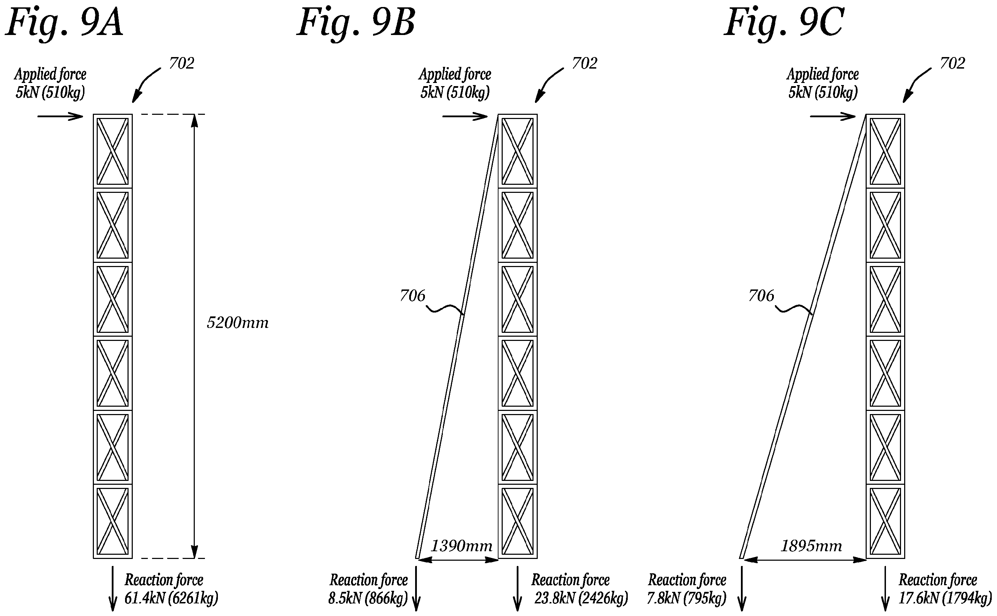

Figs. 9A-9C show examples of lateral forces acting on an example frame structure 702 for use in the grid of Fig. 7A and within the system of Fig. 1. A reaction force within each of Figs. 9A-9C was calculated using a structural finite element analysis and design application, STAAD.Pro. In each of the calculations, an applied force of 5kN (510kg) acts laterally on the frame structure 702 (i.e., to represent the lateral forces). The frame structure 702 has a height of 5200mm, a constant stiffness, and a constant structure. The reaction forces vary based on height, stiffness, and structure of the frame structure 702. As a constant height, stiffness, and structure of the frame structure 702 was used, a relationship can be seen between the examples.

In general, a height of the frame structure 702 may be a same as a height of the grid 100, a height of the frame structure 702 may be greater than a height of the grid 100, or a height of the frame structure 702 may be smaller than a height of the grid 100. A plurality of frame structures 702 within one grid 100 may comprise different heights.

The stiffness of the frame structure 702 depends on a material of the frame structure 702. In some examples, (a material of) the frame structure 702 comprises any one or more of steel, or low-alloy steel, or carbon steel, or any suitable material. In any example, the material of the frame structure 702 may comprise one or more of the following properties: hardness, toughness, elongation, tensile strength, yield strength, fatigue strength, malleability, durability, lustre, and corrosion resistance. The frame structure 702 may be described as a steel structure or tower.

The structure of the frame structure 702 may vary. In any example, the frame structure 702 may comprise four sides. Each of the four sides may comprise two vertical edges, wherein each vertical edge is perpendicularly joined to an adjacent vertical edge. Each of the four sides may comprise two horizontal edges. In some examples, the frame structure 702 is disposed within one vertical column (or one storage or grid cell) of the grid within four vertical frame members. In other examples, the frame structure may be disposed within two or a plurality of adjacent vertical columns (or storage or grid cells) of the grid within four vertical frame members.

The frame structures 702 shown in Figs. 7A-7E and Figs. 9A-9C comprise horizontal sections. Each of the four sides of the frame structure 702 may comprise horizontal sections. Each horizontal section is horizontally joined between two vertical edges of one of the four sides of the frame structure 702.

The frame structures 702 shown in Figs. 9A-9C further comprise pairs of diagonal sections. Each of the four sides of the frame structure 702 may comprise pairs of diagonal sections. Each pair of diagonal sections comprise a first diagonal section intersecting with a second diagonal section. Each pair of diagonal sections may be joined: between two adjacent horizontal sections (or a horizontal section and a horizontal edge of the frame structure 702); and with the corresponding vertical edge of the frame structure 702, where the horizontal section (or horizontal edge) is in contact with the vertical edge. Each pair of diagonal sections may be joined: between two adjacent horizontal sections (or a horizontal section and a horizontal edge of the frame structure 702); and with the horizontal section (or horizontal edge), where the horizontal section (or horizontal edge) is in contact with the corresponding vertical edge of the frame structure 702.

The frame structure 702 of any example may be any suitable frame structure.

Fig. 9A shows a first example of lateral forces acting on a frame structure 702 within the grid 100 of Fig. 7A. In the first example, no vertically inclined connecting means as used. The applied force produced a downwards reaction force of 61.4kN (6261kg) from the frame structure 702. This shows the substantial downwards reaction force based on an applied lateral force.

In Figs. 9B and 9C, the second end of the vertically inclined connecting means 706 is configured to be secured to the base 712 of the system at a predetermined distance from the base 710 of the frame structure 702.

Fig. 9B shows a second example of lateral forces acting on a frame structure 702 within the grid 100 of Fig. 7A. In this example, a second end of a vertically inclined connecting means 706 was secured to the base 712 of the system at a distance of 1390mm from the base 710 of the frame structure 702. The applied force produced a downwards reaction force of 23.8kN (2426kg) from the frame structure 702 and a downwards reaction force of 8.6kN (866kg) from the second end of the vertically inclined connecting means 706.

Fig. 9C shows a third example of lateral forces acting on a frame structure 702 within the grid 100 of Fig. 7A. In this example, a second end of a vertically inclined connecting means 706 was secured to the base 712 of the system at a distance of 1895mm from the base 710 of the frame structure 702. The applied force produced a downwards reaction force of 17.6kN (1794kg) from the frame structure 702 and a downwards reaction force of 7.8kN (795kg) from the second end of the vertically inclined connecting means 706.

The use of a frame structure 702 within the grid 100 significantly reduces the downwards reaction force on the grid 100 because the downward reaction force is produced from the stable frame structure 702 instead of the potentially instable grid 100.

In can also be seen that including a vertically inclined connecting means 706 significantly reduces the downwards reaction force from the frame structure 702 for a same or identical applied lateral force. This means that the forces are significantly reduced with the use of a vertically inclined connecting means 706. When the second end of the vertically inclined connecting means 706 is configured to be secured to the base 712 of the system at a greater predetermined distance from the base 710 of the frame structure 702, the downward reaction forces from both the frame structure 702 and the second end of the vertically inclined connecting means 706 are further reduced.

The vertically inclined connecting means 706 extends or passes through a plurality of vertical frame members 102 diagonally or at an angle. Hence, the distance of the second end of the vertically inclined connecting means 706 from the base 712 of the system may also be measured as an angle from the top 708 of the frame structure 702. When the vertically inclined connecting means 706 extends from the top 708 of the frame structure 702 to the base 712 of the system, a smaller angle of the vertically inclined connecting means 706 from the top 708 of the frame structure 702 results in a reduction of the downward reaction forces from both the frame structure 702 and the second end of the vertically inclined connecting means 706.

In any example, the at least one vertically inclined connecting means 706 extends from the top 708 of the frame structure 702 to the base 712 of the system at an angle between approximately 15 degrees and one of: 90 degrees, 75 degrees, 60 degrees, 45 degrees, or 30 degrees, from the top 708 of the frame structure 702.

Any one or more of the number of frame structures 702, the number of vertically inclined connecting means 706, and the length of the vertically inclined connecting means 706, or the predetermined distance of the vertically inclined connecting means 706, or the angle (to the vertical frame structures) of the vertically inclined connecting means 706 from the top 708 of the frame structure 702 can be varied depending on the lateral force applied to the frame structure 702 and a tolerable downward reaction force applied to the base 712 of the system.

The structural support for the system can be increased by any one or more of increasing the number of frame structures 702, increasing the number of vertically inclined connecting means 706, and increasing the length of the vertically inclined connecting means 706, or increasing the predetermined distance of the vertically inclined connecting means 706, or decreasing the angle of the vertically inclined connecting means 706 from the top 708 of the frame structure 702.

The number of frame structures 702 required is reduced through use of vertically inclined connecting means 706 for the same amount of structural support.

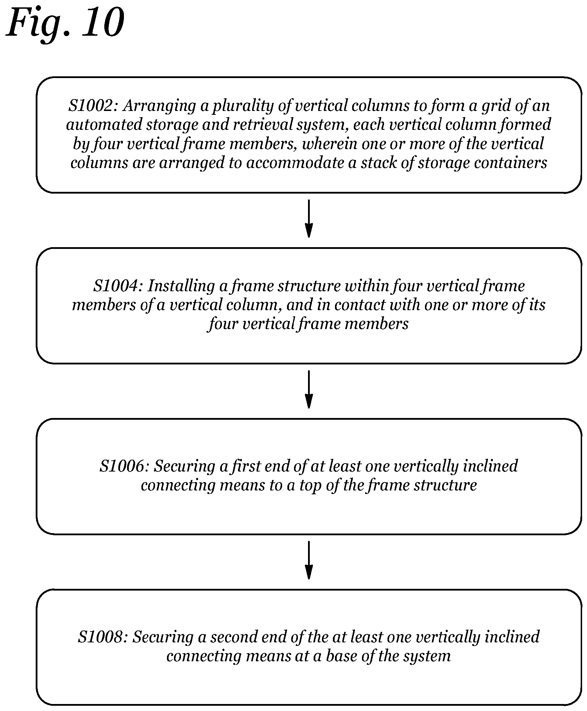

Fig. 10 shows a flowchart illustrating a method of the present disclosure for use in the system of Fig. 1. The method relates to supporting a grid of an automated storage and retrieval system, such as in Fig. 1.

At a first step S1002, the method comprises arranging a plurality of vertical columns to form the grid, each vertical column formed by four vertical frame members. One or more of the vertical columns are arranged to accommodate a stack of storage containers. At a second step S1004, the method comprises installing a frame structure within four vertical frame members of a vertical column, and in contact with one or more of its four vertical frame members. At a third step S1006, the method comprises securing a first end of at least one vertically inclined connecting means to a top of the frame structure. At a fourth step S1008, the method comprises securing a second end of the at least one vertically inclined connecting means at a base of the system.

After the third step S1006 and before the fourth step S1008, the method may comprise extending the at least one vertically inclined connecting means from the top of the frame structure to the base of the system at an angle between approximately 15 degrees and one of: 90 degrees, 75 degrees, 60 degrees, 45 degrees, or 30 degrees, from the top of the frame structure. When the vertical frame member has a cross-section comprising a hollow section and two vertical side sections, the at least one vertically inclined connecting means may be extended through respective hollow sections from the top of the frame structure to the base of the system.

The grid, vertical columns, vertical frame members, storage containers, frame structure, and vertically inclined connecting means of the method may comprise any the features of the grid 100, vertical columns 102, vertical frame members 104, storage containers 112, frame structure 702, and vertically inclined connecting means 706, respectively, described throughout the description.

Aspects of the present disclosure are set out below. Each item below corresponds to an aspect of the disclosure, and each possible combination of any of the items corresponds to an aspect of the disclosure. When items are combined, two or more instances of an element with the same name are to be understood as referring to the same element, even if the element is introduced by the word "a" more than once. Each possible combination of any features from the items below with any features described above also forms part of the disclosure.
1a. A support arrangement for a grid of an automated storage and retrieval system, comprising:
   a frame structure within and in contact with a vertical column formed by four vertical frame members of the grid, one or more of the vertical columns for accommodating a stack of storage containers; and
   at least one vertically inclined connecting means comprising a first end configured to be secured to a top of the frame structure and a second end configured to be secured at a base of the system.
1b. A support arrangement for a grid of an automated storage and retrieval system, comprising:
   a frame structure within a vertical column of the grid, and
   at least one connecting means comprising a first end configured to be secured to a top of the vertical column and a second end configured to be secured at a base of the system.
2. The support arrangement of aspect 1a or aspect 1b, wherein the at least one vertically inclined connecting means is continuous from the first end to the second end.
3. The support arrangement of any one of the preceding aspects, wherein the at least one vertically inclined connecting means comprises any one of: a rope, a flat wire, a wire, a cord, a cable, a string, a bar, or a strut.
4. The support arrangement of any one of the preceding aspects, wherein the at least one vertically inclined connecting means extends from the top of the frame structure to the base of the system at an angle between approximately 15 degrees and one of: 90 degrees, 75 degrees, 60 degrees, 45 degrees, or 30 degrees, from the top of the frame structure.
5. The support arrangement of any one of the preceding aspects, wherein the second end is configured to be secured at the base of the system at a predetermined distance from a base of the frame structure.
6. The support arrangement of any one of the preceding aspects, wherein the base of the system is an external floor underlying the grid, or a floor of the grid.
7. The support arrangement of any one of the preceding aspects, wherein each vertical frame member has a cross-section comprising a hollow section and two vertical side sections, and
   wherein the at least one vertically inclined connecting means optionally extends through respective hollow sections from the top of the frame structure to the base of the system.
8. The support arrangement of aspect 7, wherein the cross-section further comprises at least one fixing means configured to connect the two vertical side sections.
9. The support arrangement of aspect 7 or aspect 8, wherein each vertical side section comprises two perpendicular storage container guiding plates, each storage container guiding plate for accommodating a corner of at least one storage container.
10. The support arrangement of any one of the preceding aspects, wherein the frame structure is secured to a base of the system.
11. The support arrangement of any one of the preceding aspects, wherein the frame structure comprises four sides.
12. The support arrangement of aspect 11, wherein each of the four sides comprises two vertical edges, wherein each vertical edge is perpendicularly joined to an adjacent vertical edge to form a quadrilateral shape; and/or
   each of the four sides comprises two horizontal edges, wherein the at least one vertically inclined connecting means is secured to a centre of a horizontal edge that comprises the top of the frame structure.
13. The support arrangement of aspect 11 or aspect 12, wherein the four sides comprise a first pair of opposite sides and a second pair of opposite sides, and
   wherein the at least one vertically inclined connecting means is a plurality of vertically inclined connecting means comprising two first pairs of vertically inclined connecting means connected to the first pair of opposite sides of the frame structure, and
   wherein the two first pairs of vertically inclined connecting means optionally extend along a first direction from the frame structure
14. The support arrangement of aspect 13, wherein the plurality of vertically inclined connecting means further comprises two second pairs of vertically inclined connecting means connected to the second pair of opposite sides of the frame structure, and wherein the two second pairs of vertically inclined connecting means optionally extend along a second direction from the frame structure.
15. The support arrangement of aspect 13 or aspect 14, wherein each pair of vertically inclined connecting means is a pair of symmetrical vertically inclined connecting means extending in opposite directions along the first or second direction from the frame structure.
16. An automated storage and retrieval system comprising:
   a grid comprising a plurality of vertical columns each formed by four vertical frame members, one or more of the vertical columns for accommodating a stack of storage containers,
   wherein at least one of the vertical columns comprises:
      a frame structure within the vertical column and in contact with the corresponding four vertical frame members; and
      at least one vertically inclined connecting means comprising a first end configured to be secured to a top of the frame structure and a second end configured to be secured at a base of the system.
17. An automated storage and retrieval system comprising:
   a grid comprising a plurality of vertical columns each formed by four vertical frame members,
   wherein at least one of the vertical columns comprises:
      a frame structure within the vertical column; and
      at least one connecting means comprising a first end configured to be secured to a top of the frame structure and a second end configured to be secured at a base of the system.
18. A method of supporting a grid of an automated storage and retrieval system, comprising:
   arranging a plurality of vertical columns to form the grid, each vertical column formed by four vertical frame members, wherein one or more of the vertical columns are arranged to accommodate a stack of storage containers;
   installing a frame structure within four vertical frame members of a vertical column, and in contact with one or more of its four vertical frame members;
   securing a first end of at least one vertically inclined connecting means to a top of the frame structure; and
   securing a second end of the at least one vertically inclined connecting means at a base of the system.
19. The method of supporting the grid 100 of the automated storage and retrieval system of aspect 1a and/or any system described herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system comprising:
a grid comprising a plurality of vertical columns each formed by four vertical frame members, one or more of the vertical columns for accommodating a stack of storage containers,
wherein at least one of the vertical columns comprises:
a frame structure within its four vertical frame members and in contact with one or more of its four vertical frame members; and
at least one vertically inclined connecting means comprising a first end configured to be secured to a top of the frame structure and a second end configured to be secured at a base of the system.

2. The automated storage and retrieval system of claim 1, wherein the at least one vertically inclined connecting means is continuous from the first end to the second end.

3. The automated storage and retrieval system of claim 1 or claim 2, wherein the at least one vertically inclined connecting means comprises any one of: a rope, a flat wire, a wire, a cord, a cable, a string, a bar, or a strut.

4. The automated storage and retrieval system of any one of the preceding claims, wherein the at least one vertically inclined connecting means extends from the top of the frame structure to the base of the system at an angle between approximately 15 degrees and one of: 90 degrees, 75 degrees, 60 degrees, 45 degrees, or 30 degrees, from the top of the frame structure.

5. The automated storage and retrieval system of any one of the preceding claims, wherein the second end is configured to be secured at the base of the system at a predetermined distance from a base of the frame structure.

6. The automated storage and retrieval system of any one of the preceding claims, wherein the base of the system is an external floor underlying the grid, or a floor of the grid.

7. The automated storage and retrieval system of any one of the preceding claims, wherein each vertical frame member has a cross-section comprising a hollow section and two vertical side sections, and
wherein the at least one vertically inclined connecting means optionally extends through respective hollow sections from the top of the frame structure to the base of the system.

8. The automated storage and retrieval system of claim 7, wherein the cross-section further comprises at least one fixing means configured to connect the two vertical side sections.

9. The automated storage and retrieval system of claim 7 or claim 8, wherein each vertical side section comprises two perpendicular storage container guiding plates, each storage container guiding plate for accommodating a corner of at least one storage container.

10. The automated storage and retrieval system of any one of the preceding claims, wherein the frame structure is secured to a base of the system.

11. The automated storage and retrieval system of any one of the preceding claims, wherein the frame structure comprises four sides.

12. The automated storage and retrieval system of claim 11, wherein each of the four sides comprises two vertical edges, wherein each vertical edge is perpendicularly joined to an adjacent vertical edge to form a quadrilateral shape; and/or
each of the four sides comprises two horizontal edges, wherein the at least one vertically inclined connecting means is secured to a centre of a horizontal edge that comprises the top of the frame structure.

13. The automated storage and retrieval system of claim 11 or claim 12, wherein the four sides comprise a first pair of opposite sides and a second pair of opposite sides, and
wherein the at least one vertically inclined connecting means is a plurality of vertically inclined connecting means comprising two first pairs of vertically inclined connecting means connected to the first pair of opposite sides of the frame structure, and
wherein the two first pairs of vertically inclined connecting means optionally extend along a first direction from the frame structure.

14. The automated storage and retrieval system of claim 13, wherein the plurality of vertically inclined connecting means further comprises two second pairs of vertically inclined connecting means connected to the second pair of opposite sides of the frame structure, and
wherein the two second pairs of vertically inclined connecting means optionally extend along a second direction from the frame structure.

15. The automated storage and retrieval system of claim 13 or claim 14, wherein each pair of vertically inclined connecting means is a pair of symmetrical vertically inclined connecting means extending in opposite directions along the first or second direction from the frame structure.
